# EUROPÄISCHE PATENTSCHRIFT

(11) **EP 0 748 672 B1**
(45) Veröffentlichungstag und Bekanntmachung des Hinweises auf die Patenterteilung: **04.04.2001**
(21) Anmeldenummer: 96106253.6
(22) Anmeldetag: 20.04.1996
(51) Int. Cl.: B27C 1/12, B27C 5/04, B27C 5/06, B65G 25/10, B23Q 7/06, B27F 1/02

(54) **Einlaufvorrichtung zur Zuführung von Werkstücken**
Feeding apparatus for feeding workpieces
Dispositif d'alimentation de pièces à usiner

(30) Priorität: 19.05.1995 DE 19518458
(43) Veröffentlichungstag der Anmeldung: 18.12.1996
(73) Patentinhaber: Michael Weinig Aktiengesellschaft, D-97941 Tauberbischofsheim (DE)
(72) Erfinder: Schmitt, Gerhard, 97950 Grossrinderfeld (DE)
(74) Vertreter: Jackisch-Kohl, Anna-Katharina

(56) Entgegenhaltungen:
- DE-A- 3 107 436
- FR-A- 2 632 887
- GB-A- 181 952
- US-A- 1 819 431
- US-A- 1 838 780
- US-A- 2 260 182
- US-A- 3 116 658
- US-A- 3 512 337
- US-A- 3 665 982

## Beschreibung

Die Erfindung betrifft eine Einlaufvorrichtung zur Zuführung von Werkstücken nach dem Oberbegriff des Anspruches 1.

Bei der Bearbeitung von Hölzern sind Einlaufvorrichtungen bekannt, bei der die Hölzer zunächst quer zu ihrer Längsrichtung bis zur Anlage an den Längsanschlag transportiert werden. Anschließend werden die Werkstücke in ihrer Längsrichtung durch die Vorschubeinheit zu einer Transporteinrichtung transportiert, welche die Werkstükke übernimmt und einer Bearbeitungsmaschine zuführt. Die Werkstücke haben unterschiedliche Längen, während die Vorschubeinheit einen vorgegebenen Hub ausführt. Darum bereitet es Probleme, unterschiedlich lange Werkstücke zuverlässig der Transporteinrichtung zuzuführen. Mit dieser Vorschubeinheit lassen sich nur Werkstücke mit begrenzten Längenunterschieden der Bearbeitungsmaschine zuführen. Die Längenunterschiede der Werkstücke sind jedoch häufig größer, so daß dann die gesamte Einlaufvorrichtung relativ zur nachfolgenden Transporteinrichtung bzw. Bearbeitungsmaschine verstellt werden muß.

Der Erfindung liegt die Aufgabe zugrunde, die gattungsgemäße Einlaufvorrichtung so auszubilden, daß unterschiedlich lange Werkstücke ohne Verstellung der Vorschubeinheit zuverlässig der nachgeschalteten Transportvorrichtung zugeführt werden können.

Diese Aufgabe wird bei der gattungsgemäßen Einlaufvorrichtung erfindungsgemäß mit den kennzeichnenden Merkmalen des Anspruches 1 gelöst.

Die erfindungsgemäße Einlaufvorrichtung weist die quer zur Vorschubrichtung liegenden Mitnehmer auf, die durch die Werkstücke selbst aus der Mitnahmelage in eine Ruhelage verstellt werden. Die übrigen, vom Werkstück nicht erfaßten Mitnehmer bleiben in ihrer Mitnahmelage. Wird darum der Längsanschlag mit der Vorschubeinheit in Vorschubrichtung bewegt, kommt der nächstfolgende Mitnehmer in Kontakt mit dem am Längsanschlag anliegenden Werkstück und schiebt es bis zur nachgeschalteten Transporteinrichtung. Auf diese Weise können unterschiedlich lange Werkstücke bei gleichem Hub der Vorschubeinheit stets bis zur Transporteinrichtung verschoben werden, da in Abhängigkeit von der Länge der Werkstücke die entsprechenden Mitnehmer in die Ruhelage verstellt werden, während die übrigen, nachfolgenden Mitnehmer in der Mitnahmelage bleiben und dadurch dafür sorgen, daß das Werkstück bei Betätigung der Vorschubeinheit bis zur nachgeschalteten Transporteinrichtung verschoben wird.

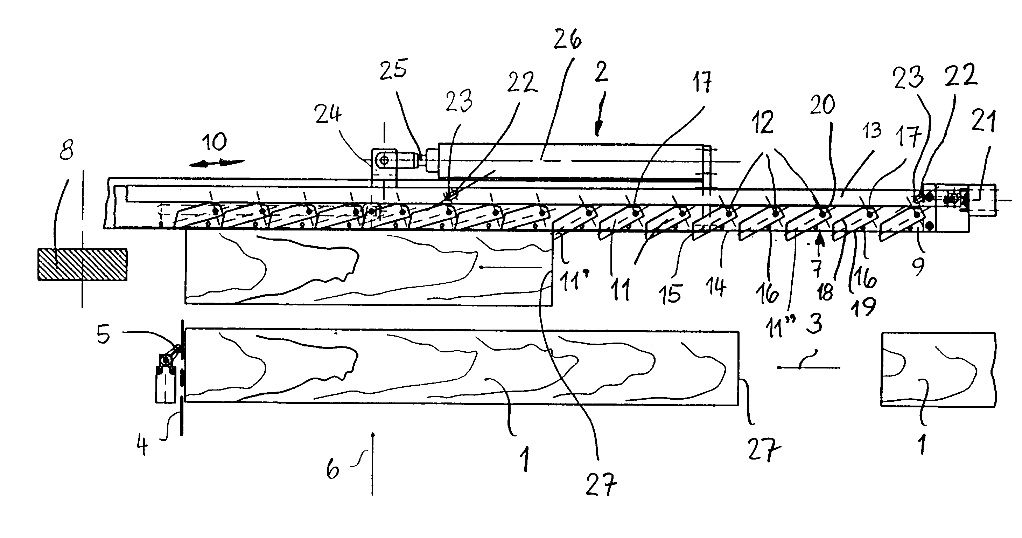

Weitere Merkmale der Erfindung ergeben sich aus den weiteren Ansprüchen, der Beschreibung und der Zeichnung.

Die Erfindung wird anhand eines in der Zeichnung dargestellten Ausführungsbeispieles näher erläutert. Die Zeichnung zeigt in Draufsicht eine erfindungsgemäße Einlaufvorrichtung.

Die auf einem (nicht dargestellten) Ständer angeordnete Einlaufvorrichtung dient dazu, bei einer Maschine zur Bearbeitung von Werkstücken aus Holz, Kunststoff oder dergleichen die Werkstücke 1 der Bearbeitungsmaschine zuzuführen. Die Werkstücke 1 sind nicht gleich lang. Für den Vorschub der unterschiedlich langen Werkstücke auf eine Transportbahn der Bearbeitungsmaschine dient eine Kolben-Zylinder-Einheit 2, die vorzugsweise pneumatisch betätigt wird.

Die in die (nicht dargestellte) Bearbeitungsmaschine einzuführenden Werkstücke 1 werden in Transportrichtung 3 auf einer (nicht dargestellten) Transportvorrichtung so weit zugeführt, bis das entsprechende Werkstück 1 mit einem Ende an einem Anschlag 4 zur Anlage kommt. Am Anschlag 4 ist ein Schalter 5 vorgesehen, der durch das Werkstück 1 in der Anlagestellung am Anschlag 4 betätigt wird. Dann wird der Antrieb der Zuführeinrichtung abgeschaltet und ein (nicht dargestellter) Schieber eingeschaltet, der das am Anschlag 4 anliegende Werkstück 1 senkrecht zur Transportrichtung 3 in Richtung des Pfeiles 6 bis an einen Längsanschlag 7 verschiebt. Mit der Kolben-Zylinder-Einheit 2 wird das am Längsanschlag 7 anliegende Werkstück 1 in seiner Längsrichtung so weit vorgeschoben, bis es unter eine Transportwalze 8 gelangt, die durch das Werkstück angehoben oder unmittelbar nach dem Vorschieben des Werkstückes 1 in bekannter Weise auf das Werkstück abgesenkt werden kann. Die Transportwalze 8 ist Teil einer (nicht dargestellten) Transporteinrichtung, die aus mehreren hintereinander angeordneten, drehbar angetriebenen Transportwalzen besteht, die auf dem Werkstück 1 aufliegen und es auf einer Transportbahn durch die Bearbeitungsmaschine transportieren.

Sobald das Werkstück 1 mit der Vorschubeinheit 2 transportiert worden ist, wird das nächste, bereits am Anschlag 4 anliegende Werkstück 1 in Transportrichtung 6 bis zum Längsanschlag 7 vorgeschoben. Unmittelbar anschließend wird das nachfolgende Werkstück 1 in Transportrichtung 3 bis zum Anschlag 4 vorgeschoben.

Da die Werkstücke 1 unterschiedlich lang sind, die Vorschubeinheit 2 jedoch nur einen konstanten Hub ausführt, ist der Längsanschlag 7 so ausgebildet, daß unabhängig von der Länge die Werkstücke 1 bei einem vorgegebenen Hub der Vorschubeinheit 2 bis unter die Transportwalze 8 geschoben werden, so daß sie von ihr und den nachfolgenden Transportwalzen erfaßt und der Bearbeitungsmaschine zugeführt werden können.

Der Längsanschlag 7 hat eine Tragschiene 9, die horizontal angeordnet ist und mit der Kolben-Zylinder-Einheit 2 als Vorschubeinheit in Pfeilrichtung 10 verschoben werden kann. Auf der Tragschiene 9 sind Mitnehmerklinken 11 schwenkbar gelagert. Sie sind als einarmige Hebel ausgebildet, die um zueinander parallele, senkrecht von der Tragschiene abstehende Achsen 12 schwenkbar sind. Die Mitnehmerklinken 11 liegen auf der Tragschiene 9 auf und sind um die Achsen 12 frei schwenkbar. Um die Mitnehmerklinken 11 in ihre Mitnehmerstellung verschwenken zu können, ist auf der Tragschiene 9 ein schienenförmiges Stellteil 13 in seiner Längsrichtung verschiebbar gelagert. Die Mitnehmerstellung der Mitnehmerklinken 11 ist dadurch gekennzeichnet, daß die Mitnehmerklinken über den dem Werkstück 1 zugewandten Rand 14 der Tragschiene 9 ragen. In der Zeichnung sind die rechts neben dem am Längsanschlag 7 anliegenden Werkstück 1 befindlichen Mitnehmerklinken 11 in ihrer Mitnehmerstellung. Die Stirnseite 15 jeder Mitnehmerklinke 11 ist derart abgeschrägt, daß sie in der Mitnehmerstellung senkrecht zum Anlagerand 14 des Längsanschlages 7 liegt. Die Mitnehmerstellung wird durch Anlage der Mitnehmerklinken an entsprechenden Anschlägen 16 auf der Tragschiene 9 erreicht. Die Mitnehmerklinken 11 liegen mit ihrer einen Längsseite an diesem Anschlag an.

Die der Stirnseite 15 gegenüberliegende Stirnseite jeder Mitnehmerklinke 11 ist mit einer Abschrägung 17 versehen, die eben verläuft und an der der schienenartige Stellteil 13 anliegt. Die einander gegenüberliegenden Längsseiten 18 und 19 jeder Mitnehmerklinke 11 liegen parallel zueinander und senkrecht zu der die Abschrägung 17 aufweisenden Stirnseite 20.

Der Stellteil 13 kann mit einem Antrieb 21, der vorzugsweise eine pneumatisch betriebene Kolben-Zylinder-Einheit ist, in seiner Längsrichtung verschoben werden. Der Stellteil 13 hat mit Abstand voneinander liegende, schräg zu seiner Längsachse liegende Durchbrechungen 22, durch die ein senkrecht von der Tragschiene 9 abstehender Zapfen 23 ragt. In der in der Zeichnung dargestellten Ausgangslage liegen die Zapfen 23 an dem dem Rand 14 der Tragschiene 9 zugewandten Ende der Durchbrechungen 22 an. Wird mit dem Antrieb 21 der Stellteil 13 in seiner Längsrichtung verschoben, wird er infolge der schräg zur Verschieberichtung liegenden Durchbrechungen 22 und der in sie eingreifenden Zapfen 23 gleichzeitig translatorisch in Richtung auf den Rand 14 verschoben. Befinden sich die Mitnehmerklinken 11 in ihrer eingeschwenkten Lage, dann werden sie durch den Stellteil 13 wieder nach außen geschwenkt, bis sie mit ihrer Längsseite 19 am Anschlag 16 anliegen.

Die Tragschiene 9 weist an ihrer dem Rand 14 gegenüberliegenden Längsseite eine vorstehende Lasche 24 auf, an der ein Kolben 25 der Vorschubeinheit 2 angelenkt ist. Der Zylinder 26 der Vorschubeinheit 2 ist an einem (nicht dargestellten) Tisch befestigt, auf dem sich die Transportbahn für die Werkstücke 1 befindet.

In der Ausgangslage befinden sich sämtliche Mitnehmerklinken 11 in ihrer Mitnehmerstellung, in der sie an den Anschlägen 16 anliegen und in der die Abschrägung 17 vom Stellteil 13 Abstand hat. Wird nun das Werkstück 1 in Transportrichtung 6 gegen die Tragschiene 9 verschoben, werden die über den Rand 14 überstehenden Mitnehmerklinken 11 im Uhrzeigersinn um die Achsen 12 verschwenkt, bis das Werkstück 1 über seine Länge am Rand 14 der Tragschiene 9 anliegt. Je nach Länge des Werkstückes 1 wird eine unterschiedliche Zahl von Mitnehmerklinken 11 verschwenkt. Die übrigen, nicht mit dem Werkstück 11 in Berührung kommenden Mitnehmerklinken verbleiben in ihrer Mitnehmerstellung. Wird nunmehr die Vorschubeinheit 2 betätigt und die Kolbenstange 25 ausgefahren, wird die Tragschiene 9 in Vorschubrichtung 10 verschoben. Die dem Werkstück 1 am nächsten liegende, in Mitnehmerstellung befindliche Mitnehmerklinke 11' kommt beim Vorschub an dem in Vorschubrichtung rückwärtigen Ende 27 des Werkstückes 1 zur Anlage und nimmt es mit. Unabhängig von der Länge des Werkstückes 1 wird es infolge der beschriebenen Ausbildung der Einlaufvorrichtung auf jeden Fall so weit verschoben, daß es unter die Transportwalze 8 gelangt und von ihr dann weiter zur Bearbeitungsmaschine transportiert werden kann. Nach dem Vorschub wird die Kolbenstange 25 eingefahren. Nachdem das Ende 27 des Werkstückes 1 beim Vorschub über die Ebene des Anschlages 4 gelangt ist, wird in bekannter Weise ein (nicht dargestellter) Schalter betätigt, der ein Freigabesignal für den Quereinschub des nächsten Werkstückes 1 gibt. Bei Beginn des Quereinschubes des nächsten Werkstückes 1 wird der Antrieb 21 betätigt. Da der Stellteil 13 hierbei in Längsrichtung und gleichzeitig translatorisch in Richtung auf den Rand 14 verschoben wird, werden die in ihrer eingeschwenkten Lage befindlichen Mitnehmerklinken durch den Stellteil 13 wieder nach außen geschwenkt, bis sie an den zugehörigen Anschlägen 16 der Tragschiene 9 anliegen. Diese Verstellung wird dadurch erreicht, daß die eingeschwenkten Mitnehmerklinken 11 am Übergang von der Abschrägung 17 zur benachbarten Längsseite 18 der Mitnehmerklinke am Stellteil 13 anliegen. Die Berührungsstelle zwischen Mitnehmerklinke 11 und Stellteil 13 liegt, bezogen auf die Vorschubrichtung 10, vor der Schwenkachse 12 der entsprechenden Mitnehmerklinke. Wird der Stellteil 13 darum in der beschriebenen Weise verschoben, greift er an dieser Übergangsstelle an und verschwenkt dadurch die Mitnehmerklinken 11 bis zur Anschlagstellung am Anschlag 16. Der Antrieb 21 wird anschließend abgeschaltet, so daß der Stellteil 13 in seine Ausgangslage zurückgeschoben wird. Nunmehr kann das nächste Werkstück 1 in Transportrichtung 6 am Rand 14 der Tragschiene 9 zur Anlage gebracht werden. In der Zeichnung folgt auf das kurze, bereits am Rand 14 anliegende Werkstück 1 ein längeres Werkstück 1. Wird es gegen den Rand 14 zur Anlage gebracht, wird entsprechend der Länge dieses Werkstückes 1 eine größere Zahl von Mitnehmerklinken 11 zurückgeschwenkt. In diesem Falle kommt beim Vorschub der Tragschiene 9 die Klinke 11'' zur Anlage am rückwärtigen Ende 27 des längeren Werkstückes 1.

Die Mitnehmerklinken 11 sind über eine solche Länge der Tragschiene 9 verteilt angeordnet, daß auch kürzeste Werkstücke 1 einwandfrei unter die Transportwalze 8 verschoben werden können. Die Länge der Tragschiene 9 und damit die Zahl der Mitnehmerklinken 11 richtet sich nach der größten Länge des zu bearbeitenden Werkstückes 1. Der Abstand der einzelnen Mitnehmerklinken 11 voneinander ist so gewählt, daß unabhängig von der Länge des Werkstückes 1 beim Vorschub der Vorschubeinheit 2 das Werkstück unter die Transportwalze 8 geschoben wird.

Der Antrieb 21 ist fest mit der Tragschiene 9 verbunden, gegenüber welcher der Stellteil 13 in der beschriebenen Weise verstellbar ist.

Die Einlaufvorrichtung ist konstruktiv einfach ausgebildet und gewährleistet einen sicheren Vorschub der unterschiedlich langen Werkstücke zur Transportvorrichtung der nachfolgenden Maschine. Der Hub der Vorschubeinrichtung 2 ist auch bei den unterschiedlich langen Werkstükken 1 stets gleich groß, so daß die Einlaufvorrichtung kompakt ausgebildet werden kann.

## Patentansprüche

1. Einlaufvorrichtung zur Zuführung von Werkstücken, mit mindestens einem Längsanschlag, gegen den das Werkstück quer zuführbar ist, und mit mindestens einer Vorschubeinheit, mit der das Werkstück quer zur Zuführrichtung der Werkstücke zu einer Transporteinrichtung vorschiebbar ist,
dadurch gekennzeichnet, daß der Längsanschlag (7) quer zur Vorschubrichtung (10) liegende Mitnehmer (11) aufweist, von denen die im Zuführweg des Werkstückes (1) zum Längsanschlag (7) liegenden Mitnehmer (11) durch das Werkstück (1) von einer Mitnahmelage in eine Ruhelage verstellbar sind, während die übrigen, in Vorschubrichtung (10) hinter dem Werkstück (1) liegenden Mitnehmer (11), in Vorschubrichtung (10) des Werkstückes (1) gesehen, in den Vorschubweg des Werkstückes (1) ragen.

2. Einlaufvorrichtung nach Anspruch 1,
dadurch gekennzeichnet, daß die Mitnehmer (11) um senkrechte Achsen (12) schwenkbar sind und vorzugsweise einarmige Hebel sind.

3. Einlaufvorrichtung nach Anspruch 1 oder 2,
dadurch gekennzeichnet, daß die Mitnehmer (11) schräg zur Vorschubrichtung (10) der Werkstücke (1) liegen und von der zugehörigen Schwenkachse (12) aus in Vorschubrichtung (10) schräg nach vorn gerichtet sind.

4. Einlaufvorrichtung nach einem der Ansprüche 1 bis 3,
dadurch gekennzeichnet, daß der Längsanschlag (7) mindestens eine Tragschiene (9) aufweist, auf der die Mitnehmer (11) gelagert sind, und daß vorteilhaft die Schwenkachsen (12) der Mitnehmer (11) auf der Tragschiene (9) vorgesehen sind.

5. Einlaufvorrichtung nach Anspruch 4,
dadurch gekennzeichnet, daß die Tragschiene (9) durch die Vorschubeinheit (2) in Vorschubrichtung (10) verschiebbar ist.

6. Einlaufvorrichtung nach Anspruch 4 oder 5,
dadurch gekennzeichnet, daß die Mitnehmer (11) über einen für die Werkstücke (1) vorgesehenen Anlagerand (14) der Tragschiene (9) ragen.

7. Einlaufvorrichtung nach einem der Ansprüche 1 bis 6,
dadurch gekennzeichnet, daß die Mitnehmer (11) in der Mitnahmelage jeweils an einem Anschlag (16) anliegen, der vorteilhaft auf der Tragschiene (9) vorgesehen ist.

8. Einlaufvorrichtung nach Anspruch 7,
dadurch gekennzeichnet, daß zumindest der über den Anlagerand (14) der Tragschiene (9) ragende Teil des Mitnehmers (11) eine Mitnahmefläche (15) aufweist, die beim Vorschub des Werkstückes (1) mit dessen in Vorschubrichtung (10) rückwärtigem Ende (27) zusammenwirkt.

9. Einlaufvorrichtung nach einem der Ansprüche 1 bis 8,
dadurch gekennzeichnet, daß zum Zurückstellen der Mitnehmer (11) aus der Ruhelage in die Mitnahmelage mindestens ein Stellteil (13) vorgesehen ist, das vorzugsweise auf der Tragschiene (9) vorgesehen und relativ zu ihr vorteilhaft schräg zur Vorschubrichtung (10) in Richtung auf den Anlagerand (14) der Tragschiene (9) verschiebbar ist.

10. Einlaufvorrichtung nach Anspruch 9,
dadurch gekennzeichnet, daß die Mitnehmer (11) durch den Stellteil (13) um ihre Schwenkachsen (12) bis zur Anlage an den zugeordneten Anschlägen (16) zurückschwenkbar sind.

## Claims

1. A feeding apparatus for feeding workpieces, having at least one longitudinal stop towards which the workpiece can be fed transversely, and having at least one advancing unit by means of which the workpiece can be advanced, transversely to the direction of feed of the workpieces, to a conveying device, characterised in that the longitudinal stop (7) has drivers (11) lying transversely to the direction of advance (10), of which the drivers (11) lying in the feed path of the workpiece (1) to the longitudinal stop (7) are movable by the workpiece (1) from a driving position into a rest position, while the remaining drivers (11), lying behind the workpiece (1) in the direction of advance, project into the advancing path of the workpiece (1) when viewed in the direction of advance (10) of the workpiece (1).

2. A feeding apparatus according to claim 1, characterised in that the drivers (11) are pivotable about perpendicular axes (12) and are preferably one-armed levers.

3. A feeding apparatus according to claim 1 or 2. characterised in that the drivers (11) lie diagonal to the direction of advance (10) of the workpieces (1) and from the associated pivot axis (12) are directed diagonally frontwards in the direction of advance (10).

4. A feeding apparatus according to any one of claims 1 to 3, characterised in that the longitudinal stop (7) has at least one bearing rail (9) on which the drivers (11) are mounted, and in that the pivot axes (12) of the drivers (11) are advantageously provided on the bearing rail (9).

5. A feeding apparatus according to claim 4, characterised in that the bearing rail (9) is movable in the direction of advance (10) by the advancing unit (2).

6. A feeding apparatus according to claim 4 or 5, characterised in that the drivers (11) project beyond a contact edge (14), of the bearing rail (9). provided for the workpieces (1).

7. A feeding apparatus according to any one of claims 1 to 6, characterised in that in the driving position, the drivers (11) each contact a stop (16) which is advantageously provided on the bearing rail (9).

8. A feeding apparatus according to claim 7, characterised in that at least the driver part projecting beyond the contact edge (14) of the bearing rail (9) has a driving surface (15) which, when the workpiece (1) advances, co-operates with the workpiece end (27) which is at the rear in the direction of advance (10).

9. A feeding apparatus according to any one of claims 1 to 8, characterised in that at least one adjusting part (13) is provided to restore the drivers (11) from the rest position into the driving position, this adjusting part (13) preferably being provided on the bearing rail (9) relative to which it is advantageously movable diagonally to the direction of advance (10), in the direction of the contact edge (14) of the bearing rail (9).

10. A feeding apparatus according to claim 9, characterised in that the drivers (11) can be pivoted back, by the adjusting part (13), about their pivot axes (12) until they contact the associated stops (16).

## Revendications

1. Dispositif d'entrée destiné à introduire des pièces à oeuvrer, comprenant au moins une butée longitudinale, contre laquelle la pièce à oeuvrer peut être introduite perpendiculairement, et comprenant au moins une unité d'avance en moyen de laquelle la pièce à oeuvrer peut être avancée perpendiculairement à la direction d'introduction des pièces vers un appareil de transport,
caractérisé en ce que la butée longitudinale (7) comprend des éléments d'entraînement (11) disposés perpendiculairement à la direction d'avance (10), parmi lesquels les éléments d'entraînement (11) disposés dans le trajet d'introduction des pièces (1) vers la butée longitudinale (7) sont susceptibles d'être déplacés depuis une position d'entraînement jusque dans une position de repos, tandis que les éléments d'entraînement restants (11) disposés derrière la pièce (1) dans la direction d'avance (10), vus dans la direction d'avance (10) de la pièce (1), dépassent dans le trajet d'avance de la pièce (1).

2. Dispositif d'entrée selon la revendication 1, caractérisé en ce que les éléments d'entraînement (11) sont capables de pivoter autour d'axes verticaux (12), et sont de préférence des leviers à un bras.

3. Dispositif d'entrée selon l'une ou l'autre des revendications 1 et 2,
caractérisé en ce que les éléments d'entraînement (11) sont disposés en oblique par rapport à la direction d'avance (10) des pièces (1), et sont orientés en oblique vers l'avant en direction d'avance (10), partant de l'axe de pivotement associé (12).

4. Dispositif d'entrée selon l'une des revendications 1 à 3, caractérisé en ce que la butée longitudinale (7) comprend au moins un rail porteur (9) sur lequel sont montés les éléments d'entraînement (11), et en ce que les axes de pivotement (12) des éléments d'entraînement (11) sont avantageusement prévus sur le rail porteur (9).

5. Dispositif d'entrée selon la revendication 4, caractérisé en ce que le rail porteur (9) est susceptible d'être avancé par l'unité d'avance (2) dans la direction d'avance (10).

6. Dispositif d'entrée selon l'une ou l'autre des revendications 4 et 5,
caractérisé en ce que les éléments d'entraînement (11) dépassent au-delà d'une bordure d'appui (14) prévue pour les pièces (1) sur le rail porteur (9).

7. Dispositif d'entrée selon l'une des revendications 1 à 6, caractérisé en ce que les éléments d'entraînement (11) sont appliqués respectivement, dans la position d'entraînement, contre une butée (16) qui est avantageusement prévue sur le rail porteur (9).

8. Dispositif d'entrée selon la revendication 7, caractérisé en ce que la partie de l'élément d'entraînement (11) au moins qui dépasse au-delà de la bordure d'appui (14) du rail porteur (9) comporte une surface d'entraînement (15) qui coopère lors de l'avance de la pièce (1) avec son extrémité postérieure (27) en direction d'avance (10).

9. Dispositif d'entrée selon l'une des revendications 1 à 8, caractérisé en ce que pour ramener les éléments d'entraînement (11) depuis la position de repos jusque dans la position d'entraînement, il est prévu au moins une pièce de positionnement (13), laquelle est de préférence prévue sur le rail porteur (9) et susceptible d'être déplacée par rapport à celui-ci avantageusement en oblique par rapport à la direction d'avance (10) en direction de la bordure d'appui (14) du rail porteur (9).

10. Dispositif d'entrée selon la revendication 9, caractérisé en ce que les éléments d'entraînement (11) sont susceptibles d'être basculés en retour au moyen de la pièce de positionnement (13) autour de leurs axes de pivotement (12) jusqu'en appui contre les butées associées (16).
